# EUROPEAN PATENT SPECIFICATION

(11) **EP 1 343 392 B1**
(45) Date of publication and mention of the grant of the patent: **27.10.2004**
(21) Application number: 01984875.3
(22) Date of filing: 20.12.2001
(51) Int. Cl.: A23P 1/08, A23L 1/217

(54) **BATTER COMPOSITION COMPRISING STARCH, DEXTRIN AND RICE FLOUR FOR FRIED FOOD PRODUCTS**
NASSPANADE ENTHALTEND WEIZENSTÄRKE, DEXTRIN UND REISMEHL FÜR FRITTIERTE PRODUKTE
COMPOSITION DE PATE A FRIRE COMPRENANT DE L'AMIDON, DE LA DEXTRINE ET DE LA FARINE DE RIZ, DESTINEE A DES PRODUITS ALIMENTAIRES FRITS

(30) Priority: 21.12.2000 GB 0031199
(43) Date of publication of application: 17.09.2003
(73) Proprietor: CERESTAR HOLDING B.V., 4551 LA Sas Van Gent (NL)
(72) Inventor: VAN BEIRENDONCK, Karin, Anna, Francisca, B-2610 Wilrijk (BE)
(74) Representative: Knowles, James Atherton
(86) International application number: PCT/EP2001/015096
(87) International publication number: WO 2002/049461

(56) References cited:
- EP-A- 0 916 268
- WO-A-94/21143
- WO-A-97/42827
- US-A- 5 431 944

## Description

### Technical field

The present invention relates to a coated parfried food product suitable for frying, oven baking or microwave heating. The food product is coated by applying a new aqueous batter mix resulting in a crunchy coating with a reduced oil pick-up and extended holding time.

### Background of the invention

Currently parfried and frozen food products are widely used in the food industry, for example in restaurants and food service operations and particularly in so-called fast-food restaurants. Prior to consumption the parfried and frozen food products are reconstituted or finish prepared by frying in hot oil, oven baking or microwave heating. It is desirable to produce a finished product with a crunchy coating, having a reduced oil pick-up, a retarded moisture transmission and extended holding time while retaining the desired sensory qualities.

Prior attempts for providing coated parfried food products have given products either with a crunchy coating, or products with reduced oil pick-up, or extended holding time, but not with all these characteristics combined. The coatings generally consist of mixtures of starches, mainly chemically modified starches, flours, gums, alginates and the like.

US 5,141,759 describes a coated potato product wherein the coating is comprising chemically modified potato starch, chemically modified corn starch and rice flour. The coating is described as being crispy and it helps retaining moisture in the finished fried product.

WO 94/21143 relates to blends of modified starches, dextrins and gums with wheat flour and additional components used to provide an improved crispy glaze on a food product. The additional components include combinations of protein with food grade acids and combinations of leavening agents, leavening acids.

US 5,648,110 describes that unexpected crispiness can be obtained in a French fry coating composition by utilising a cross-linked potato starch characterised by a selected viscosity in combination with rice flour.

US 5,849,351 relates to a coating composition for fat-fried foods comprising a blend of modified corn starch and rice flour. The serving time of the final product is prolonged:

US 5,622,741 relates to a process for preparing a gluten free potato product with an extended holding time and improved texture, wherein the coating process is performed with an aqueous slurry of corn flour, corn starch, and dextrin.

US 5,431,944 relates to a batter mix comprising a leavening agent, a starch blend which in itself is comprising a high amylose starch, starch, dextrin and a food gum. The mix further comprises between 40 to 80% of a filler such as wheat flour. Said batter mix provides a reconstituted food product with a tender and crisp exterior and a moist interior.

WO 98/18347 relates to a coated food having an oil absorption and moisture transmission retarding crunchy coating, wherein the coating is comprising a predust adhered to the food and a water-containing batter, gelled and adhered with the predust. The batter contains at least 20% dextrin and a pectate and the predust contains at least about 50% starch and a setting agent for the pectate, i.e. an at least partially water-soluble edible calcium compound.

WO 00/28828 relates to a batter mix for producing parfried and frozen French fry strips, which can be finish-prepared with improved crispiness and with reduced toughness and reduced off-flavours. The described batter mix consists of 1-12% potato starch, 20-30% tapioca starch, 20-40% modified and unmodified corn starch, 15-25% rice flour and 4-12% dextrin.

WO 97/42827 relates to an aqueous batter mix for making deep fat fried vegetable products and said mix comprises primarily high amylose rice flour.

There is a need for a coated and parfried food product suitable for frying, oven-baking or microwave heating wherein the coating is crunchy, non-sticky, has a reduced oil pick-up, a retarded moisture transmission and an extended holding time. Furthermore, the method for providing such a coating should be simple and applicable in a one step-process.

The current invention provides such a product and method.

### Summary of the invention

The present invention relates to a coated and parfried food product suitable for frying, oven-baking or microwave heating and wherein the food product has a coating comprising on dry base 45% w/w to 65% w/w native wheat starch, 10% w/w to 35% w/w dextrin, and 10% w/w to 20% w/w rice flour.

The present invention further relates to coated parfried vegetables, preferably potato products.

The present invention relates to a coated parfried food product wherein the coating has an oil pick-up of less than 6%, preferably less than 5%, more preferably less than 4% and a holding crispiness time of more than 20 minutes, preferably more than 30 minutes, more preferably a holding crispiness time of more than 40 minutes.

The present invention further provides a method for pre-treating a food product to make it suitable for frying, oven baking or microwave heating, and wherein said method is comprising the following steps:
a) coating the food product by dipping or spraying with an aqueous batter mix wherein the dry substance of the batter mix is comprising 45% w/w to 65% w/w native wheat starch, 10% w/w to 35% w/w dextrin, and 10% w/w to 20% w/w rice flour,
b) parfrying the coated food product,
c) optionally freezing the parfried food product.

The method of the current invention is further characterised in that the food product is potato and said method is comprising the following steps:
a) cutting potatoes in pieces,
b) blanching the pieces,
c) optionally partially drying the pieces,
d) coating the pieces with an aqueous batter mix at 40% to 45% dry substance and comprising on dry base 50% w/w to 60% w/w native wheat starch, 20% to 25% w/w potato dextrin, 10% to 20% w/w rice flour, 4% w/w to 8% w/w salt and 0.5% w/w to 2% w/w leavening agents such as sodium acid pyrophosphate and/or sodium bicarbonate,
e) parfrying the coated pieces,
f) optionally freezing the parfried pieces.

The present invention relates to a method for preparing a finished-coated food product wherein said method is comprising the following steps:
a) Parfrying a coated food product wherein the coating is comprising on dry base 45% w/w to 65% w/w native wheat starch, 10% w/w to 35% w/w dextrin, 10% w/w to 20% w/w rice flour,
b) Optionally freezing the parfried coated food product,
c) Finish frying the parfried coated food product,

The present invention provides an aqueous batter mix having a cold slurry viscosity of 100 to 150 mPas at 40% to 50% dry substance, and comprising on dry base 45% w/w to 65% w/w native wheat starch, 10% w/w to 35% w/w dextrin, and 10% w/w to 20% w/w rice flour.

The present invention further provides an aqueous batter mix comprising on dry base 50% w/w to 60% w/w native wheat starch, 15% w/w to 30% w/w potato dextrin, and 12% w/w to 18% w/w rice flour, preferably between 13% w/w to 16% w/w rice flour.

The present invention further relates to the use of an aqueous batter mix comprising on dry base 45% w/w to 65% w/w native wheat starch, 10% w/w to 35% w/w dextrin, and 10% w/w to 20% w/w rice flour for coating of vegetables, or pieces thereof.

### Detailed description of the invention

The present invention relates to a coated and parfried food product suitable for frying, oven-baking or microwave heating and wherein the food product has a coating comprising on dry base 45% w/w to 65% w/w native wheat starch, 10% w/w to 35% w/w dextrin, and 10% w/w to 20% w/w rice flour.

The present invention further relates to coated parfried vegetables, preferably potato products.

Thorough efforts for obtaining a coated parfried food product characterised by a crunchy, non-sticky transparent coating have finally lead to coated parfried food products wherein the coating is comprising on dry base 45% w/w to 65% w/w native wheat starch, 10% w/w to 35% w/w dextrin, and 10% w/w to 20% w/w rice flour.

The rice flour being present in the coating is responsible for a light texture and improved crunchiness of the coating compared with coatings comprising corn flour. A coated parfried food product wherein the coating is comprising corn flour does not have the light texture and is less crunchy.

Dextrins can be obtained by heat treatment of dry potato, tapioca and/or pea starch in presence or absence of acid. Preferably, potato dextrin is applied for providing a coated parfried food product wherein the coating is non-sticky and is not suffering from blistering.

Starch in the coating is obtained from wheat and it is applied in its native form without chemical modifications. Previously, either chemically modified starches, high amylose corn starches and/or corn starches have been used.

Surprisingly, native wheat starch, potato dextrin and rice flour mixed in the appropriate ratios result in coated parfried food products wherein the coating is crunchy, non-sticky, uniform, non-blistered, transparent and further characterised by a reduced oil pick-up, a retarded moisture transmission, and an extended holding time.

The coated parfried food product can be prepared for consumption by frying in hot oil, oven baking or microwave heating. In fast food restaurants, this finishing preparation step might be followed by a holding period under heat lamps before serving the food.

Crispiness is a very important sensory quality, which needs to be retained during the whole preparation process and while holding the food under heat lamps.

The current invention provides a coated parfried food product with an extended holding time, and yet retaining good quality product in respect of crispiness,

The coated parfried food product of the current invention has a reduced moisture transmission (i.e after the final step of heating) and can be kept for an extended holding time under heat lamps. Such moisture transmission or evaporation of water causes cooling of the product while the final product becomes soggy. Sealing the surfaces of the coated product from water loss allows placing the food under heat lamps after frying or baking and yet the crispiness and moisture content is retained under the heat lamps for a period of 20 minutes, preferably 30 minutes, more preferably 40 minutes.

Another important quality criterion of the coated parfried food product is its reduced oil pick-up. The food product disclosed in the current invention has an oil pick-up of less than 6%, preferably less than 5%, more preferably less than 4% during the parfrying step, which is a very short treatment in hot oil. This reduced oil pick-up gives a fried food product which is substantially less greasy. A coated parfried food product wherein the coating is comprising high amylose corn starch, gives a higher oil pick-up and shorter holding times compared with the coated parfried product of the current invention,

The method to measure oil pick-up is based on the SOXHLET principle and a Soxtec System HT equipment (Tecator) can be applied for this measurement.

Additionally the coating is non-sticky such that the coated food pieces are neither sticking to each other in the parfrying step nor during the finishing cooking of the parfried food product. In particular the coating comprising potato dextrin, and native wheat starch results in a coated parfried food product wherein the coating is not suffering from stickiness. Stickiness is more pronounced when applying a coating comprising high amylose corn starch and tapioca dextrin.

Furthermore, the coated parfried food product has a uniform exterior, so that the final cooking gives a uniform cooked product. The coating comprising potato dextrin, and native wheat starch results in a coated parfried food product wherein the coating has a uniform colour without blistering. A coating based on high amylose com starch and tapioca dextrin is not so uniform in colour.

The food product itself may be chosen from a wide variety of food products, such as all kind of vegetables, and to a lesser extent meat, seafood and poultry. A variety of vegetables such as broccoli, cauliflower, onions, Jerusalem Artichokes, sweet potatoes, beets, turnips, carrots, peppers, mushrooms, squash, eggplant, preferably potato products, or any other vegetable which can be parfried and coated can be applied. French fries are a particular example of the coated parfried food product.

The present invention further provides a method for pre-treating food products to make it suitable for frying, oven baking or microwave heating, and wherein said method is comprising the following steps:
a) coating the food product by dipping or spraying with an aqueous batter mix wherein the dry substance of the batter mix is comprising 45% w/w to 65% w/w native wheat starch, 10% w/w to 35% w/w dextrin, and 10% w/w to 20% w/w rice flour,
b) parfrying the coated food product,
c) optionally freezing the parfried food product.

Depending on whether the food product is coated completely or whether pieces thereof are coated, the coating step is preceded by cutting the food product in pieces.

The coating may be applied in a variety of manners, such as passing the food product through a conventional curtain coater for flowing the aqueous coating batter mix onto the food product, spraying the batter onto the food product, submerging and/or dipping the food product in the batter. It is important to apply a coating method, which ensures a complete coating on the food product, in order for obtaining a uniform coating.

A coating can also be applied by using a conventional submerging apparatus, which usually constrains the food product between a lower porous belt and an upper porous belt, and the food product can be completely coated when being submerged in the batter.

The method of the current invention is further characterised in that the food product is potato and said method is comprising the following steps:
a) cutting potatoes in pieces,
b) blanching the pieces,
c) optionally partially drying the pieces,
d) coating the pieces with an aqueous batter mix at 40% to 45% dry substance and comprising on dry base 50% w/w to 60% w/w native wheat starch, 20% to 25% w/w potato dextrin, 10% to 20% w/w rice flour, 4% w/w to 8% w/w salt and 0.5% w/w to 2% w/w leavening agents such as sodium acid pyrophosphate and/or sodium bicarbonate,
e) parfrying the coated pieces,
f) optionally freezing the parfried pieces.

Potatoes are first washed and peeled. The whole potatoes are then optionally preheated for about 20 to 40 minutes to an internal temperature range of 55 to 60°C. This preheating step is preferably used in the case of a machine-cutting operation in order to reduce product shattering during cutting and to give a smoother cut surface. The potatoes are then cut into pieces, preferably appropriately sized and shaped such as French fry strips. After cutting, the strips are blanched in steam or hot water to inactivate the enzymes. In this blanching step, dextrose and/or sodium acid pyrophosphate may be present in minor amounts for improved browning and colour control during subsequent processing. Alternatively, after blanching, the pieces may be dipped in water containing these constituents.

Following blanching and/or application of aqueous solution the excess water is drained and/or the blanched potato strips are partially dried in any suitable manner, such as a drying step in hot air for 5 to 30 minutes to remove surface moisture.

Next, the coating step is performed with an aqueous batter mix at 40% to 45% dry substance and comprising on dry base 50% w/w to 60% w/w native wheat starch, 20% to 25% w/w potato dextrin, 10% to 20% w/w rice flour, 4% w/w to 8% w/w salt and 0.5% w/w to 2% w/w leavening agents such as sodium acid pyrophosphate and/or sodium bicarbonate.

The coated potato pieces are parfried in oil at a temperature of about 180 to 200°C during about 30 seconds to 90 seconds. A vegetable oil is preferred, however it will be recognised and understood that other cooking oils may be used such as animal oil, or combinations of vegetable oil and animal oils. In this regard, it will be further understood that the cooking oil may comprise any of a wide range of natural and synthetic fats or oils consisting essentially of triglycerides and commonly referred to as fat substitutes which may be fully or partly indigestible.

Finally the parfried potato products are removed from the hot oil and are promptly frozen and packaged by conventional means for storage until consumption.

The present invention further relates to a method for preparing a finished-coated food product wherein said method is comprising the following steps:
a) Parfrying a coated food product wherein the coating is comprising on dry base 45% w/w to 65% native wheat starch, 10% w/w to 35% w/w dextrin, 10% w/w to 20% w/w rice flour,
b) Optionally freezing the parfried coated food product,
c) Finish frying the parfried coated food product.

A coated food product is parfried and finished fried for obtaining the finished coated food product which is ready for consumption. In between the parfrying step and finish frying step, the product can be stored in the freezer. The finish frying step itself can be a single or a multiple step process.

The present invention further provides an aqueous batter mix having a cold slurry viscosity of 100 to 150 mPas at 40% to 50% dry substance, and comprising on dry base 45% w/w to 65% w/w native wheat starch, 10% w/w to 35% w/w dextrin, and 10% w/w to 20% w/w rice flour.

The present invention furthermore provides an aqueous batter mix comprising on dry base 50% w/w to 60% w/w native wheat starch, 15% w/w to 30% w/w potato dextrin, and 12% w/w to 18% w/w rice flour, preferably between 13% w/w to 16% w/w rice flour.

The present invention further relates to the use, of an aqueous batter mix comprising on dry base 45% w/w to 65% w/w native wheat starch, 10% w/w to 35% w/w dextrin, and 10% w/w to 20% w/w rice flour for coating of vegetables, or pieces thereof.

The product and method disclosed in the present invention have the following advantages:
- the coated parfried food product has a crunchy coating and crispiness is retained for a holding time of at least 20 minutes.
- The coated parfried food product has a oil pick-up of less than 6%, preferably less than 5%.
- The moisture transmission is reduced
- The coating is non-sticky
- The coating is transparent and invisible
- The coating is uniform without any blistering
- The coating is applied onto the food product by using a single aqueous batter mix, without any pre-dust treatment
- The coating batter mix has a clean label; it is devoid of chemically modified starches.

The invention is illustrated by way of the following example.

### Example.

### Preparation of the batter mix

The dry batter mix was prepared by mixing the following ingredients:
55 g native wheat starch (C 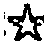 Gel® 20006)(Cerestar)
23 g potato dextrin (C 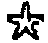 DrySet® 08913)(Cerestar)
15 g rice flour (Remyflo® R-7-200)
6 g of salt (sodium chloride)
0.5 g sodium Acid Pyrophosphate
0.5 g sodium Bicarbonate

The ingredients were thoroughly mixed for obtaining a homogeneous dry blend. 140 g water was added and the complete aqueous batter mix was homogenised by stirring with a spoon.

### Application of the batter mix

Pre-cut potato products (fries) were blanched in hot water (80°C) for 10 minutes.

The potato strips were then dipped for 30 seconds in a 0.5%(w/v) sodium acid pyrophosphate solution, followed by drying in a convection oven for 10 minutes at 93°C. The dried potato strips were dipped in an aqueous batter mix having aforementioned composition. In order for having a control over the batter pick-up the potato strips were weighted individually before and after the coating step in the aqueous batter mix, and the dipping was resulting in a batter pick-up of between 9% to 11%.

The thus coated fries were parfried for 45 seconds at 180°C. These parfried fries were frozen.

For the evaluation of the quality of the finished product the frozen fries were finish fried at 180°C during 2,5 minutes.

### Evaluation of quality of product

### a) Measurement of oil pick-up of parfried product.

Soxtec-System HT and accessories (Tecator) was applied for the Soxhlet principle by extraction with diethyl ether. The weight of the sample before and after the extraction was measured and the ratio of the weight after extraction to the weight prior to extraction multiplied with 100 gave an oil pick-up value of 4.9% for the parfried product coated with the batter mix aforementioned.

### b) Sensorial evaluation of the finished product (i.e after finish frying)

The quality of the product was determined by a taste panel.

The colour of the finished fries was golden brown.

The coating was uniform without any blistering.

The coating was crispy and even when the coated products were kept for at least 20 minutes under infra-red heating lamps, the quality (e.g. crispiness) of the coated products remained unchanged. The product was equally crispy as before the holding time.

## Claims

1. A coated and parfried food product suitable for frying, oven-baking or microwave heating **characterised in that** the food product has a coating comprising on dry base
a) 45% w/w to 65% w/w native wheat starch,
b) 10% w/w to 35% w/w dextrin,
c) 10% w/w to 20% w/w rice flour

2. A food product according to claim 1 **characterised in that** the food product is a vegetable, preferably potato product,

3. A food product according to claim 1 or 2 **characterised in that** the food product has a coating with an oil pick-up of less than 6%, preferably less than 5%, more preferably less than 4%, and a holding crispiness time of more than 20 minutes, preferably more than 30 minutes, more preferably a holding crispiness time of more than 40 minutes,

4. A method for pre-treating a food product to make it suitable for frying, oven baking or microwave heating, wherein said method is comprising the following steps:
a) coating the food product by dipping or spraying with an aqueous batter mix wherein the dry substance of the batter mix is comprising 45% w/w to 65% w/w native wheat starch, 10% w/w to 35% w/w dextrin, and 10% w/w to 20% w/w rice flour,
b) parfrying the coated food product,
c) optionally freezing the parfried food product.

5. A method for pre-treating food products according to claim 4 **characterised in that** the food product is potato and said method is comprising the following steps:
a) cutting potatoes in pieces,
b) blanching the pieces,
c) optionally partially drying the pieces,
d) coating the pieces with an aqueous batter mix at 40% to 45% dry substance and comprising on dry base 50% w/w to 60% w/w native wheat starch, 20% to 25% w/w potato dextrin, 10% to 20% w/w rice flour, 4% w/w to 8% w/w salt and 0.5% w/w to 2% w/w leavening agents such as sodium acid pyrophosphate and/or sodium bicarbonate,
e) parfrying the coated pieces,
f) optionally freezing the parfried pieces.

6. A method for preparing a finished coated food product **characterised in that** said method is comprising the following steps:
a) Parfrying a coated food product wherein the coating is comprising on dry base 45% w/w to 65% w/w native wheat starch, 10% w/w to 35% w/w dextrin, 10% w/w to 20% w/w rice flour,
b) Optionally freezing the parfried coated food product,
c) Finish frying the parfried coated food product.

7. An aqueous batter mix **characterised in that** said batter mix has a cold slurry viscosity of 100 to 150 mPas at 40% to 50% dry substance, and said batter mix is comprising on dry base:
a) 45% w/w to 65% w/w native wheat starch,
b) 10% w/w to 35% w/w dextrin,
c) 10% w/w to 20% w/w rice flour

8. An aqueous batter mix according to claim 7 **characterised in that** said mix is comprising on dry base:
a) 50% w/w to 60% w/w native wheat starch,
b) 15% w/w to 30% w/w potato dextrin,
c) 12% w/w to 18% w/w rice flour, preferably between 13% w/w to 16% w/w rice flour.

9. Use of an aqueous batter mix comprising on dry base 45% w/w to 65% w/w native wheat starch, 10% w/w to 35% w/w dextrin, and 10% w/w to 20% w/w rice flour for coating of vegetables, or pieces thereof.

## Patentansprüche

1. Überzogenes und angebratenes Lebensmittelprodukt, geeignet zum Braten, Ofenbacken oder Mikrowellenerwärmen, **dadurch gekennzeichnet, daß** das Lebensmittelprodukt einen Überzug aufweist, umfassend auf Trockenbasis
a) 45 Gew.-% bis 65 Gew.-% native Weizenstärke,
b) 10 Gew.-% bis 35 Gew.-% Dextrin,
c) 10 Gew.-% bis 20 Gew.-% Reismehl.

2. Lebensmittelprodukt nach Anspruch 1, **dadurch gekennzeichnet, daß** das Lebensmittelprodukt ein pflanzliches, vorzugsweise Kartoffel-Produkt ist.

3. Lebensmittelprodukt nach Anspruch 1 oder 2, **dadurch gekennzeichnet, daß** das Lebensmittelprodukt einen Überzug mit einer Ölaufnahme von weniger als 6 %, vorzugsweise weniger als 5 %, stärker bevorzugt weniger als 4 %, und einer Knusprigkeitshaltezeit von mehr als 20 Minuten, vorzugsweise mehr als 30 Minuten, stärker bevorzugt einer Knusprigkeitshaltezeit von mehr als 40 Minuten aufweist.

4. Verfahren zur Vorbehandlung eines Lebensmittelproduktes, um es zum Braten, Ofenbakken oder Mikrowellenerwärmen geeignet zu machen, wobei das Verfahren die folgenden Schritte umfaßt:
a) Überziehen des Produktes durch Tauchen oder Sprühen mit einer wässerigen Teigmischung, wobei die Trockensubstanz der Teigmischung 45 Gew.-% bis 65 Gew.-% native Weizenstärke, 10 Gew.-% bis 35 Gew.-% Dextrin und 10 Gew.-% bis 20 Gew.-% Reismehl umfaßt,
b) Anbraten des überzogenen Lebensmittelproduktes,
c) gegebenenfalls Einfrieren des angebratenen Lebensmittelproduktes.

5. Verfahren zur Vorbehandlung der Lebensmittelprodukte nach Anspruch 4, **dadurch gekennzeichnet, daß** das Lebensmittelprodukt Kartoffel ist und dieses Verfahren die folgenden Schritte umfaßt:
a) Schneiden der Kartoffeln in Stücke,
b) Blanchieren der Stücke,
c) gegebenenfalls teilweise sTrocknen der Stücke,
d) Überziehen der Stücke mit einer wässerigen Teigmischung bei 40 % bis 45 % Trockensubstanz, und umfassend auf Trockenbasis 50 Gew.-% bis 60 Gew.-% Weizenstärke, 20 bis 25 Gew.-% Kartoffel-Dextrin, 10 bis 20 Gew.-% Reismehl, 4 Gew.-% bis 8 Gew.-% Salz und 0,5 Gew.-% bis 2 Gew.-% Treibmittel, wie Natriumdihydrogenpyrophosphat und/oder Natriumbicarbonat,
e) Anbraten der überzogenen Stücke,
f) gegebenenfalls Einfrieren der angebratenen Stücke.

6. Verfahren zur Herstellung eines fertig überzogenen Lebensmittelproduktes, **dadurch gekennzeichnet, daß** das Verfahren die folgenden Schritte umfaßt:
a) Anbraten eines überzogenen Lebensmittelproduktes, wobei der Überzug auf Trockenbasis 45 Gew.-% bis 65 Gew.-% native Weizenstärke, 10 Gew.-% bis 35 Gew.-% Dextrin, 10 Gew.-% bis 20 Gew.-% Reismehl umfaßt,
b) gegebenenfalls Einfrieren des angebratenen, überzogenen Lebensmittelproduktes,
c) Fertigbraten des angebratenen, überzogenen Lebensmittelproduktes.

7. Wässerige Teigmischung, **dadurch gekennzeichnet, daß** die Teigmischung eine Kaltschlammviskosität von 100 bis 150 mPas bei 40 % bis 50 % Trockensubstanz aufweist, und die Teigmischung auf Trockenbasis:
a) 45 Gew.-% bis 65 Gew.-% native Weizenstärke,
b) 10 Gew.-% bis 35 Gew.-% Dextrin,
c) 10 Gew.-% bis 20 Gew.-% Reismehl
umfaßt.

8. Wässerige Teigmischung nach Anspruch 7, **dadurch gekennzeichnet, daß** die Mischung auf Trockenbasis:
a) 50 Gew.-% bis 60 Gew.-% native Weizenstärke,
b) 15 Gew.-% bis 30 Gew.-% Kartoffel-Dextrin,
c) 12 Gew.-% bis 18 Gew.-% Reismehl, vorzugsweise 13 Gew.-% bis 16 Gew.-% Reismehl, umfaßt.

9. Verwendung einer wässerigen Teigmischung, umfassend auf Trockenbasis 45 Gew.-% bis 65 Gew.-% native Weizenstärke, 10 Gew.-% bis 35 Gew.-% Dextrin und 10 Gew.-% bis 20 Gew.-% Reismehl zum Überziehen von Gemüse oder Stücken davon.

## Revendications

1. Produit alimentaire enrobé et pré-frit adapté pour la friture, la cuisson au four ou le chauffage au micro-ondes, **caractérisé en ce que** le produit alimentaire a un enrobage comprenant sur la base d'un extrait sec :
a) de 45% poids/poids à 65% poids/poids d'amidon natif de blé,
b) de 10% poids/poids à 35% poids/poids de dextrine,
c) de 10% poids/poids à 20% poids/poids de farine de riz.

2. Produit alimentaire selon la revendication 1, **caractérisé en ce que** le produit alimentaire est un légume, de préférence un produit à base de pomme de terre.

3. Produit alimentaire selon la revendication 1 ou 2, **caractérisé en ce que** le produit alimentaire a un enrobage ayant un taux d'absorption d'huile inférieur à 6%, de préférence inférieur à 5%, de manière encore plus préférée inférieur à 4%, et un temps de maintien du croustillant supérieur à 20 minutes, de préférence supérieur à 30 minutes, de manière encore plus préférée un temps de maintien du croustillant supérieur à 40 minutes.

4. Procédé de pré-traitement d'un produit alimentaire pour le rendre adapté pour la friture, la cuisson au four ou le chauffage au micro-ondes, dans lequel ledit procédé comprend les étapes de :
a) enrobage du produit alimentaire en le plongeant dans ou en l'aspergeant d'un mélange aqueux de pâte à frire dans lequel la matière sèche du mélange de pâte à frire comprend de 45% poids/poids à 65% poids/poids d'amidon natif de blé, de 10% poids/poids à 35% poids/poids de dextrine, et de 10% poids/poids à 20% poids/poids de farine de riz,
b) pré-friture du produit alimentaire enrobé,
c) optionnellement de congélation du produit alimentaire pré-frit.

5. Procédé de pré-traitement de produits alimentaires selon la revendication 4, **caractérisé en ce que** le produit alimentaire est de la pomme de terre et **en ce que** ledit procédé comprend les étapes de :
a) coupage des pommes de terre en morceaux,
b) blanchissage des pommes de terre,
c) optionnellement de séchage partiel des morceaux,
d) enrobage des morceaux avec un mélange aqueux de pâte à frire ayant un taux de matière sèche allant de 40% à 45% et comprenant sur la base d'un extrait sec de 50% poids/poids à 60% poids/poids d'amidon natif de blé, de 20% poids/poids à 25% poids/poids de dextrine de pomme de terre, de 10% poids/poids à 20% poids/poids de farine de riz, de 4% poids/poids à 8% poids/poids de sel et de 0,5% poids/poids à 2% poids/poids d'agents levants tels que le pyrophosphate acide de sodium et/ou le bicarbonate de soude,
e) pré-friture des morceaux enrobés,
f) optionnellement de congélation des morceaux préfrits.

6. Procédé de préparation d'un produit alimentaire enrobé fini, **caractérisé en ce que** ledit procédé comprend les étapes de :
a) pré-friture du produit alimentaire enrobé dans lequel l'enrobage comprend sur la base d'un extrait sec de 45% poids/poids à 65% poids/poids d'amidon natif de blé, de 10% poids/poids à 35% poids/poids de dextrine, de 10% poids/poids à 20% poids/poids de farine de riz,
b) optionnellement de congélation du produit alimentaire enrobé pré-frit,
c) terminaison de la friture du produit alimentaire enrobé pré-frit.

7. Mélange aqueux de pâte à frire, **caractérisé en ce que** ledit mélange de pâte à frire a une viscosité coulante à froid de 100 à 150 mPas avec un taux de matière sèche allant de 40% à 50%, et **en ce que** ledit mélange de pâte à frire comprend sur la base d'un extrait sec :
a) de 45% poids/poids à 65% poids/poids d'amidon natif de blé,
b) de 10% poids/poids à 35% poids/poids de dextrine,
c) de 10% poids/poids à 20% poids/poids de farine de riz.

8. Mélange aqueux de pâte à frire selon la revendication 7, **caractérisé en ce que** ledit mélange comprend sur la base d'un extrait sec :
a) de 50% poids/poids à 60% poids/poids d'amidon natif de blé,
b) de 15% poids/poids à 30% poids/poids de dextrine de pomme de terre,
c) de 12% poids/poids à 18% poids/poids de farine de riz, de préférence de 13% poids/poids à 16% poids/poids de farine de riz.

9. Utilisation d'un mélange aqueux de pâte à frire comprenant sur la base d'un extrait sec de 45% poids/poids à 65% poids/poids d'amidon natif de blé, de 10% poids/poids à 35% poids/poids de dextrine, et de 10% poids/poids à 20% poids/poids de farine de riz pour l'enrobage de légumes ou de morceaux de ceux-ci.
